# EUROPEAN PATENT APPLICATION

(11) **EP 2 400 806 A1**
(43) Date of publication of application: **28.12.2011**
(21) Application number: 09841690.2
(22) Date of filing: 17.03.2009
(51) Int. Cl.: H04W 68/02

(54) **PAGING METHOD, DEVICE AND SYSTEM FOR MULTI-CARRIER FREQUENCY CELL**

(71) Applicant: Huawei Technologies Co., Ltd., Longgang District, Shenzhen Guangdong 518129 (CN)
(72) Inventor: WANG, Jun, Guangdong 518129 (CN); WANG, Xuelong, Guangdong 518129 (CN); HUANG, Ying, Guangdong 518129 (CN)
(74) Representative: Thun, Clemens
(86) International application number: PCT/CN2009/070828
(87) International publication number: WO 2010/105406

(57) **Abstract**

A paging method for a multi-carrier cell includes: receiving a paging message sent by a core network device, where the paging message carries user equipment (UE) information; and obtaining a carrier frequency serving the UE according to the UE information, and paging the UE on the carrier frequency, therefore avoiding a waste of paging resources caused by paging on all frequency bands. By using the preceding method, a waste of common paging resources caused by paging on all carrier frequencies in the multi-carrier cell is avoided.

## Description

### FIELD OF THE INVENTION

The present invention relates to the field of communications technologies, and in particular, to a paging technology.

### BACKGROUND OF THE INVENTION

With the development of communications technologies, one cell may no longer have only one single carrier frequency, and may have multiple carrier frequencies. Such a cell is referred to as a multiple carrier frequency cell or a multiple carrier wave cell. Further, multiple carrier frequencies in one cell may serve the same type of user equipment (UE) and may also serve different types of UE. In the prior art, a method for an evolved NodeB (eNB) to page a UE is to perform the paging on all carrier frequencies in one cell.

When multiple carrier frequencies in one cell serve different types of UE and an eNB intends to page a particular type of UE, if the paging is performed according to the existing paging method, the eNB needs to perform the paging on all carrier frequencies in the cell. For example, if two carrier frequencies exist in one cell: a carrier frequency f1 for Long Term Evolution (LTE) and a carrier frequency f2 for LTE-Advanced (LTE-A). According to the prior art, an LTE UE can select and camp on only the carrier frequency f1, while an LTE-A UE may select and camp on the carrier frequency f1 or f2, that is, both f1 and f2 may serve the LTE-A UE. Therefore, when a network intends to page the LTE-A UE or the LTE UE, according to the existing paging method, the eNB will perform the paging on all carrier frequencies in the cell, that is, perform the paging on both f1 and f2. When the network pages the LTE-A UE, because the LTE-A UE may camp on f1 or f2, there is no problem with the paging on both f1 and f2. When the network intends to page the LTE UE, however, the paging will also be performed on both f1 and f2. In this case, because the LTE UE does not camp on the carrier frequency f2, the paging on the carrier frequency f2 wastes a common paging channel.

### SUMMARY OF THE INVENTION

In view of this, one embodiment of the present invention provides a paging method, including: receiving a paging message sent by a core network device, where the paging message carries UE information; and obtaining a carrier frequency serving the UE according to the UE information, and paging the UE on the carrier frequency.

One embodiment of the present invention also provides an access network device, including: a receiving unit, configured to receive a paging message sent by a core network device, where the paging message carries UE information; and a paging unit, configured to obtain a carrier frequency serving the UE according to the UE information, and page the UE on the carrier frequency.

One embodiment of the present invention also provides a paging system, including: an access network device, configured to receive a paging message sent by a core network device, where the paging message carries UE information; and obtain a carrier frequency serving the UE according to the UE information, and page the UE on the carrier frequency.

The foregoing paging solution for a multi-carrier cell avoids, by paging corresponding UEs on carrier frequencies serving different UEs, a waste of common paging resources caused by paging on all carrier frequencies in the multi-carrier cell.

### BRIEF DESCRIPTION OF THE DRAWINGS

FIG 1 is a schematic flowchart of a paging method for a multi-carrier cell according to one embodiment of the present invention;
FIG 2 is a simplified schematic flowchart of a paging method for a multi-carrier cell according to another embodiment of the present invention;
FIG 3 is a simplified schematic flowchart of a paging method for a multi-carrier cell according to another embodiment of the present invention;
FIG 4 is a simplified schematic flowchart of a paging method for a multi-carrier cell according to another embodiment of the present invention; and
FIG 5 is a simplified schematic structural diagram of an access network device according to one embodiment of the present invention.

### DETAILED DESCRIPTION OF THE EMBODIMENTS

The following describes the present invention in detail below with reference to the accompanying drawings and specific embodiments.

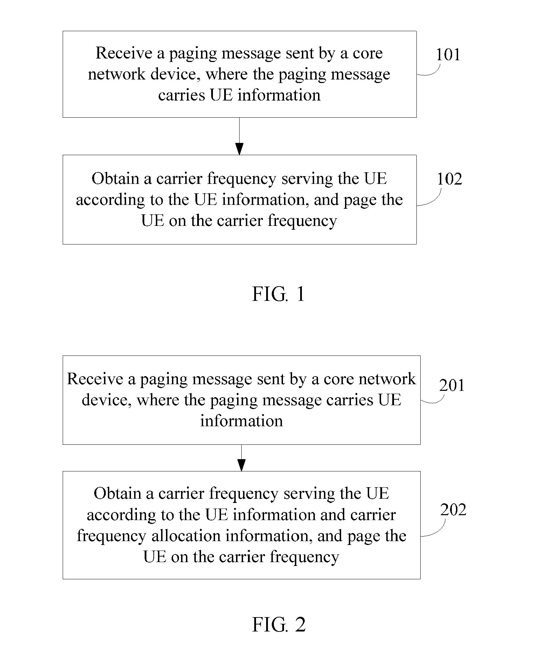

As shown in FIG 1, a paging method for a multi-carrier cell according to one embodiment of the present invention includes:
Step 101: Receive a paging message sent by a core network device, where the paging message carries UE information.
Step 102: Obtain a carrier frequency serving the UE according to the UE information, and page the UE on the carrier frequency.

The foregoing paging method for a multi-carrier cell avoids, by paging corresponding UEs on carrier frequencies serving different UEs, a waste of common paging resources caused by paging on all carrier frequencies in the multi-carrier cell.

As shown in FIG 2, a paging method for a multi-carrier cell according to another embodiment of the present invention includes:
Step 201: Receive a paging message sent by a core network device, where the paging message carries UE information.

Specifically, the preceding UE information includes one or any combination of the following types of information: UE type information, UE service information, UE function information, and so on.

Step 202: Obtain a carrier frequency serving the UE according to the UE information and carrier frequency allocation information, and page the UE on the carrier frequency.

It should be noted that during network planning, a network management (NM) device configures the preceding carrier frequency allocation information for an access network device, and the access network device stores the carrier frequency allocation information. For example, the NM device configures the following information for the access network device: a frequency band for LTE is f1, and a frequency band for LET-A is f2; or a frequency band for service X is f3 and a frequency band for service Y is f4; or a frequency band for function A is f5, and a frequency band for function B is f6. The access network device stores the information configured by the NM device. In this way, when the access network device receives a paging message, if the UE information carried in the paging message is the UE type information, such as LTE or LTE-A, the access network device pages an LTE UE on the frequency band f1, or pages an LTE-A UE on the frequency bands f1 and f2; if the UE information carried in the paging message is the UE service information, such as X or Y, the access network device pages an UE using service X on the frequency band f3, or pages an UE using service Y on the frequency band f4; if the UE information carried in the paging message is the UE function information, such as A or B, the access network device pages an UE having function A on the frequency band f5, or pages an UE having function B on the frequency band f6.

In another example, the NM device configures the following information for the access network device: a frequency band for service X of LTE is f1, a frequency band for service Y of LTE is f2, a frequency band for service X of LTE-A is f3 and a frequency band for service Y of LTE-A is f4. In this way, when the access network device receives a paging message, if the UE information carried in the paging message is a combination of the UE type information and the UE service information, such as (LTE, X), (LTE, Y), (LTE-A, X) and (LTE-A, Y), the access network device pages an LTE UE using service X on the frequency band f1, or pages an LTE UE using service Y on the frequency band f2, or pages an LTE-A UE using service X on the frequency band f3, or pages an LTE-A UE using service Y on the frequency band f4.

More specifically, the preceding carrier frequency serving the UE includes a single carrier frequency or a carrier frequency set. Therefore, in step 202, paging the UE on the carrier frequency includes paging the UE on the single carrier frequency, or paging the UE on carrier frequency in the carrier frequency set.

The foregoing paging method for a multi-carrier cell avoids, by paging corresponding UEs on carrier frequencies serving different UEs, a waste of common paging resources caused by paging on all carrier frequencies in the multi-carrier cell.

The following describes a paging method according to one embodiment of the present invention by taking a specific paging scenario for a multi-carrier cell as an example. In this embodiment, UE type information is taken as an example of UE information. Further, in this embodiment, a core network device is a mobility management entity (MME), an NM device is an operation and maintenance (OAM) device, and an access network device is an eNB. In this embodiment, two carrier frequencies exist in the multi-carrier cell: a carrier frequency f1 for LTE and a carrier frequency f2 for LTE-A. According to the prior art, an LTE UE can select and camp on only the carrier frequency f1, while an LTE-A UE may select and camp on the carrier frequency f1 or f2, that is, both f1 and f2 may serve the LTE-A UE. During network planning, the OAM device configures carrier frequency allocation information for the eNB, where the carrier frequency allocation information is: A carrier frequency for LTE is f1 and a carrier frequency for LTE-A is f2. The eNB stores the preceding carrier frequency allocation information.

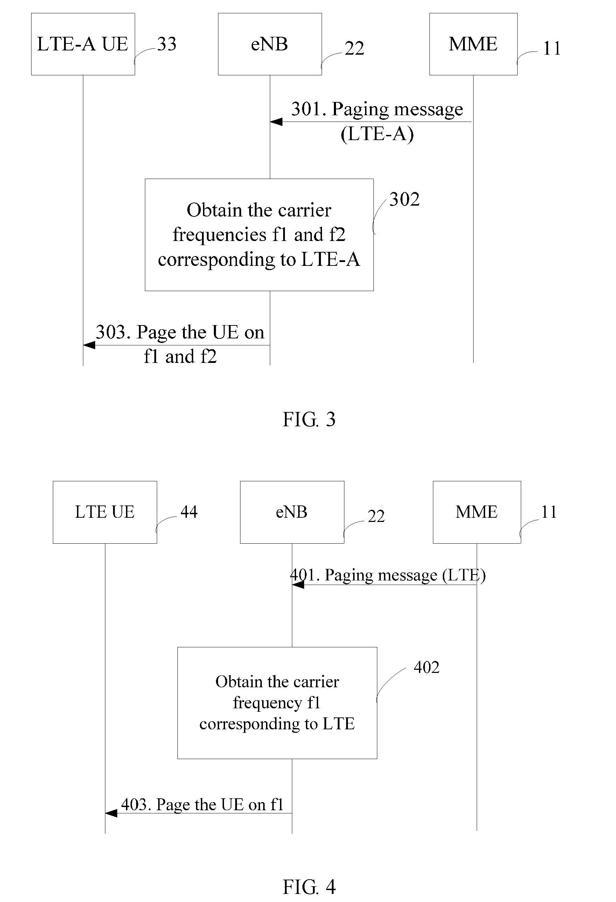

When a network pages the LTE-A UE, the paging process is as shown in FIG 3:
Step 301: The MME 11 sends a paging message to the eNB 22, where the paging message carries the type information LTE-A of the LTE-A UE. A form of the type information is unlimited to the extent that the eNB 22 can be notified that the type of UE to be paged by the network is LTE-A.
Step 302: After receiving the preceding paging message, the eNB 22 obtains the carrier frequencies f1 and f2 corresponding to LTE-A according to the type information LTE-A and the locally stored carrier frequency allocation information.
Step 303: The eNB 22 pages the LTE-A UE 33 on the carrier frequencies f1 and f2.

When the network pages the LTE UE, the paging process is as shown in FIG 4:

Step 401: The MME 11 sends a paging message to the eNB 22, where the paging message carries the type information LTE of the LTE UE. A form of the type information is unlimited to the extent that the eNB 22 can be notified that the type of UE to be paged by the network is LTE.

Step 402: After receiving the preceding paging message, the eNB 22 obtains the carrier frequency f1 corresponding to LTE according to the type information LTE and the locally stored carrier frequency allocation information.

Step 403: The eNB 22 pages the LTE UE 44 only on the carrier frequency f1.

By using the preceding paging method for a multi-carrier cell, it is not necessary to perform the paging on all carrier frequencies, that is, f1 and f2, in the cell when the eNB pages the LTE UE, and instead, the paging needs to be performed only on the carrier frequency f1 serving the LTE UE, thereby avoiding a waste of a common paging channel.

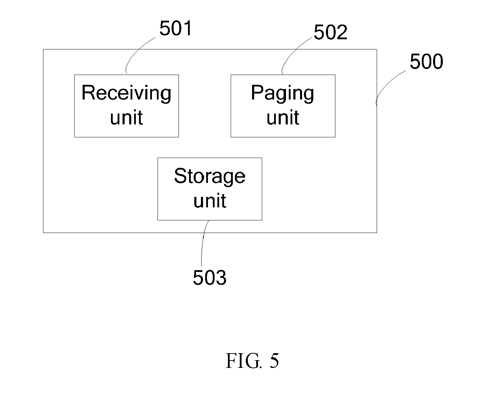

Another embodiment of the present invention provides an access network device 500. As shown in FIG 5, the access network device 500 includes a receiving unit 501 and a paging unit 502. The receiving unit 501 is configured to receive a paging message sent by a core network device, where the paging message carries UE information; and the paging unit 502 is configured to obtain a carrier frequency serving the UE according to the UE information, and page the UE on the carrier frequency.

More specifically, the receiving unit 501 is further configured to receive one or any combination of the following messages sent by the core network: a paging message carrying UE type information, a paging message carrying UE service information, and a paging message carrying UE function information.

Further, the access network device 500 includes a storage unit 503, configured to store carrier frequency allocation information configured by an NM device.

More specifically, the paging unit 502 is further configured to obtain a carrier frequency serving the UE according to the UE information and the carrier frequency allocation information stored by the storage unit 503, and page the UE on the carrier frequency.

The preceding carrier frequency serving the UE includes a single carrier frequency or a carrier frequency set. Therefore, the paging unit 502 is further configured to page the UE on the single carrier frequency, or page the UE on carrier frequency in the carrier frequency set.

One embodiment of the present invention also provides a paging system, including: an access network device 500 as described in the preceding embodiment, configured to: receive a paging message sent by a core network device, where the paging message carries UE information; and obtain a carrier frequency serving the UE according to the UE information, and page the UE on the carrier frequency. For a specific structure of the access network device, refer to the preceding embodiment that describes the access network device 500, and therefore no description is provided here..

The access network device and the paging system according to the preceding embodiments avoid, by paging corresponding UEs on carrier frequencies serving different UEs, a waste of common paging resources caused by paging on all carrier frequencies in the multi-carrier cell.

Detailed above are only exemplary embodiments of the present invention, and the protection scope of the present invention is not limited thereto. Any modification or substitution readily conceivable by those skilled in the art within the scope of technical disclosures of the embodiments of the present invention shall be covered within the protection scope of the present invention. The protection scope of the present invention is subj ect to the appended claims.

## Claims

1. A paging method for a multi-carrier cell, comprising:
receiving a paging message sent by a core network device, wherein the paging message carries user equipment, UE, information;
obtaining a carrier frequency serving the UE according to the UE information, and paging the UE on the carrier frequency.

2. The paging method for a multi-carrier cell according to claim 1, wherein the UE information comprises one or any combination of the following information: UE type information, UE service information, and UE function information.

3. The paging method for a multi-carrier cell according to claim 1, wherein the obtaining the carrier frequency serving the UE according to the UE information comprises:
obtaining the carrier frequency serving the UE according to the UE information and carrier frequency allocation information, wherein the carrier frequency allocation information is configured by a network management, NM, device.

4. The paging method for a multi-carrier cell according to claim 3, further comprising:
storing the carrier frequency allocation information configured by the NM device during network planning.

5. The paging method for a multi-carrier cell according to any one of claims 1-4, wherein the carrier frequency serving the UE comprises a single carrier frequency or a carrier frequency set, and the paging the UE on the carrier frequency comprises: paging the UE on the single carrier frequency or paging the UE on carrier frequency in the carrier frequency set.

6. An access network device, comprising:
a receiving unit, configured to receive a paging message sent by a core network device, where the paging message carries user equipment, UE, information; and
a paging unit, configured to obtain a carrier frequency serving the UE according to the UE information, and page the UE on the carrier frequency.

7. The access network device according to claim 6, wherein the receiving unit is further configured to receive one or any combination of the following messages sent by the core network device: a paging message carrying UE type information, a paging message carrying UE service information, and a paging message carrying UE function information.

8. The access network device according to claim 6, wherein the access network device further comprises: a storage unit, configured to store carrier frequency allocation information configured by a network management, NM, device.

9. The access network device according to claim 8, wherein the paging unit is further configured to obtain the carrier frequency serving the UE according to the UE information and the carrier frequency allocation information stored by the storage unit, and page the UE on the carrier frequency.

10. The access network device according to any one of claims 6-9, wherein the carrier frequency serving the UE comprises a single carrier frequency or a carrier frequency set, and the paging unit is further configured to page the UE on the single carrier frequency, or page the UE on carrier frequency in the carrier frequency set.

11. A paging system, comprising:
an access network device, configured to receive a paging message sent by a core network device, wherein the paging message carries user equipment, UE, information, obtain a carrier frequency serving the UE according to the UE information, and page the UE on the carrier frequency.

12. The paging system according to claim 10, wherein the access network device comprises:
a receiving unit, configured to receive a paging message sent by a core network device, wherein the paging message carries UE information; and
a paging unit, configured to obtain a carrier frequency serving the UE according to the UE information, and page the UE on the carrier frequency.

13. The access network device according to claim 12, wherein the receiving unit is further configured to receive one or any combination of the following messages sent by the core network device: a paging message carrying UE type information, a paging message carrying UE service information, and a paging message carrying UE function information.

14. The paging system according to claim 12, wherein the access network device further comprises a storage unit configured to store carrier frequency allocation information configured by a network management, NM, device.

15. The paging system according to claim 12, wherein the paging unit is further configured to obtain the carrier frequency serving the UE according to the UE information and the carrier frequency allocation information stored by the storage unit, and page the UE on the carrier frequency.

16. The paging system according to any one of claims 11-15, wherein the carrier frequency serving the UE comprises a single carrier frequency or a carrier frequency set, and the paging unit is further configured to page the UE on the single carrier frequency, or page the UE on carrier frequency in the carrier frequency set.
